Europäisches Patentamt

(19) European Patent Office

Office européen des brevets

(11) Publication number: **0 147 387**
**B1**

# (12) EUROPEAN PATENT SPECIFICATION

(45) Date of publication of patent specification: **07.01.88**

(21) Application number: **83901780.3**

(22) Date of filing: **18.04.83**

(86) International application number:
**PCT/US83/00578**

(87) International publication number:
**WO 84/04025 25.10.84 Gazette 84/25**

(51) Int. Cl.⁴: **A 23 N 1/00**

## (54) SURFACE FOR SUPPORTING CUT FRUIT IN FRUIT JUICER.

(43) Date of publication of application:
**10.07.85 Bulletin 85/28**

(45) Publication of the grant of the patent:
**07.01.88 Bulletin 88/01**

(84) Designated Contracting States:
**BE DE FR GB NL**

(56) References cited:
**US-A- 587 903
US-A-2 065 271
US-A-2 199 876
US-A-2 257 430
US-A-2 667 118
US-A-4 088 070
US-A-4 106 401**

(73) Proprietor: **THE AUTOMATIC ORANGE JUICER
CORP.
103-03 Metropolitan Avenue
Forest Hills, NY 11375 (US)**

(72) Inventor: **NELSON, Stewart, C.
215 Burns Street
Forest Hills, NY 11375 (US)**

(74) Representative: **Gordon, Michael Vincent et al
GILL JENNINGS & EVERY 53-64 Chancery Lane
London WC2A 1HN (GB)**

EP 0 147 387 B1

Courier Press, Leamington Spa, England.

## Description

The present invention is directed to an extracting machine for automatically obtaining juice from citrus fruit, particularly oranges, lemons and grapefruits.

Extracting machines for this purpose are generally well known and are employed in both commercial juicing operations and in food serving establishments where juice is freshly squeezed for the consumer. In such operations, it is necessary that a cut surface of the citrus fruit be exposed, for example by halving the citrus fruit, which is then squeezed so as to extract the juice, without removing the undesirable flavour components from the rind or peel. The juice which has been expressed from the cut fruit halves is then recovered, while the rinds are discarded.

Many patents have described the type of machinery generally used in accordance with the present invention.

A fruit juice extractor of which the present invention is an improvement is that disclosed in U.S. patent 2,723,618. It describes how oranges, for example, are cut into halves, the halves are advanced, cut surfaces downward, over stationary male press elements and then squeezed by cup-like female press elements which are moved down axially to interact with the male press elements. When the female press elements are retracted, the rinds are ejected, while the juice from the citrus fruit is recovered.

More particularly, it describes how the whole citrus fruit are fed against cutting means disposed in a vertical plane at right angles to and midway between a pair of means for expressing juice simultaneously from both cut fruit halves. Means are provided for feeding the cut fruit halves onto a support surface for supporting the cut fruit halves during expressing the juice from the cut fruit halves, said support surface being provided by an elastic sheet member allowing passage therethrough of the juice expressed from the cut fruit halves and being supported by and held in place on the outer portions of upstanding opposite walls of a rectangular juice collector tray positioned below and having a bottom. The expressing means is located above and below the support surface, the means below the support surface being provided within the juice collector tray.

Similar machines and operations are described in, for example, U.S. patents 2,629,317; 2,572,286; 2,413,866; 2,531,026; 3,185,072; 2,199,876 and 4,088,070.

These patents, and others in the field, describe various support surfaces for supporting the cut fruit while it is being squeezed between male and female press elements. Generally the support surfaces are rigid and are formed of, for example, metal. In the afore-referenced U.S. patent 2,723,618 in the name of Matthews, a rubber apron is employed as the support surface and is supported by and held in place on those upstanding opposite walls of the rectangular juice collector tray which are parallel to the cutting means which severs the fruit. It has been found that this type of rubber apron for supporting the cut fruit, while the most widely used in the field, presents problems, particularly when soft fruit is to be squeezed. If this softness is not taken into account during squeezing of the fruit, then the juice obtained is not of the high quality desired because materials are extracted from the peel or rind, and frequently all of the juice contained within the fruit is not obtained.

In the arrangement according to Matthews, and for a complete understanding of the present invention the disclosure of Matthews, except for the cut fruit support surface, is herein incorporated by reference, there is a danger of cut fruit, particularly soft cut fruit, being forced below the rubber apron which forms the cut fruit support surface. Because of the way in which the rubber apron is supported in Matthews, an opening is formed along an edge of the rubber apron which abuts a platform where the cut fruit is placed after being severed and split by an upstanding cam pedestal. Because of the manner of mounting the apron in Matthews, merely making the apron larger does not solve the problem, as some type of opening remains, or at least an unsupported surface of the apron, so that further movement of the cut fruit may force it under the apron, rather than onto the apron, where it must be placed in order to be properly squeezed. This problem is particularly severe when soft fruit is employed, as it can be deformed sufficiently easily to force it under the apron.

If cut fruit is forced under the apron, and thus into the juice collector tray, severe problems result. For example, the presence of the cut fruit in the juice collector tray may prevent full interaction between the male and female press elements so that further cut fruit placed on the support surface is not fully squeezed. Additionally, there is some contamination of the flavour of the juice being squeezed from the cut fruit resting on the support surface and being acted upon by the male and female press elements, as this juice will run through the rind of the cut fruit which is in the juice collector tray. Still further, a shut down and clean out is necessitated, if the problems just raised are to be avoided, so that the cut fruit in the juice collector tray may be removed. If it is not removed, there is the further danger of contamination of the juice because of the initiation of decay of the cut fruit remaining in the juice collector tray.

In accordance with the present invention, a citrus fruit juice extracting machine comprises:

—means for feeding whole citrus fruit against means for cutting the fruit into halves, said cutting means being disposed in a vertical plane at right angles to and midway between a pair of means for expressing juice simultaneously from both cut fruit halves;

—means for feeding the cut fruit halves onto a support surface for supporting the cut fruit halves during expressing the juice from the cut fruit halves, said support surface being provided by an elastic sheet member allowing passage therethrough of the juice expressed from the cut fruit halves and being supported by and held in place on the outer portions of upstanding opposite walls of a rectangular juice collector tray positioned below and having a bottom; and

—means above and below the support surface for expressing the juice from the cut fruit halves, the means below the support surface being provided within the juice collector tray;

characterised in that said elastic sheet member is supported by and held in place on the opposite walls of the juice collector tray which are perpendicular to said cutting means, no opening being left between said support surface and said juice collector tray adjacent the location of feeding said cut fruit halves onto said support surface.

There is thus no danger of cut fruit being forced under the elastic sheet member even when, as in the preferred arrangement, the elastic sheet member is not held in place on the other opposite walls of the juice collector tray, said other opposite walls being parallel to the cutting means.

It should also be noted that the rubber apron disclosed in Matthews has a series of slots which extend in a direction perpendicular to the cutting means and a series of ridges which extend in a direction perpendicular to the slots. This allows for some flexing of the rubber apron as it is moved downwardly against the male press elements under the influence of the female press elements. However, there is a severe stretching of the rubber apron during this squeezing operation, resulting in extreme wear.

On the other hand, U.S. patents 2,311,565 and 2,629,317 employ rigid, possibly metallic platforms to support the cut fruit halves as they are moved downwardly over their conical male press elements by their female press elements. Mechanism must be provided to allow these platforms to move downwardly with their carried cut fruit so that the male and female press elements may co-act on the cut fruit. Obviously, there is not the extreme stretching and wear on these platforms that is experienced with the rubber apron of Matthews, but substantially more mechanism is required because of the movement necessary to allow the platforms to work in conjunction with the squeezing or pressing elements.

Preferably, in the present invention: the elastic sheet member is formed with reinforcing ridges extending in a direction parallel to the cutting means and generally overlying the expressing means provided within the juice collector tray; the elastic sheet member is formed with slits extending in a direction parallel to the cutting means and centrally overlying the expressing means provided within the juice collector tray; and the expressing means provided within the juice collector tray is in the form of a pair of conical male press elements; these measures facilitating operation of the present invention without undue wear or stretching of the elastic sheet member, and without excessive mechanism, when the elastic sheet member is forced downwardly, because the slits are spread around the conical male press elements, allowing better interaction between the male and female press elements and a more complete juicing action.

Other preferred features of the present invention are that: the elastic sheet member is formed with a plurality of openings to provide for passage of the juice expressed from the cut fruit; each of the slits is formed with enlarged ends to prevent lengthening of the slits; each portion of the elastic sheet member supported by and held in place on a respective outer portion of said opposite walls of the juice collector tray is formed at its end with a hollow tubular section through which a reinforcing rod is inserted; and the reinforcing rods are held beneath lugs formed on the outer portions of said opposite walls of the juice collector tray.

A citrus fruit juice extracting machine, in accordance with the present invention, is shown in the accompanying drawings, in which:—

Figure 1 is a fragmentary perspective view of the extracting machine;

Figure 2 is a sectional view along the line 2—2 of Figure 1; and

Figure 3 is a sectional view along the line 3—3 of Figure 2.

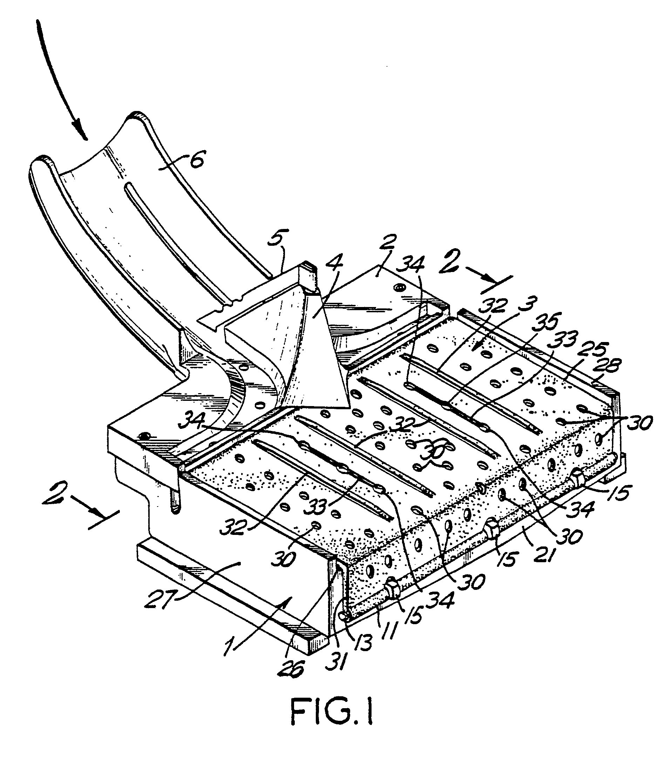

Referring particularly to Figure 1, a portion of the fruit cutting mechanism and a portion of the juice expressing mechanism of an automatic juicing machine are illustrated. These include a rectangular juice collector tray 1, to a portion of which is attached a platform 2. A cut fruit support surface 3 in the form of an elastic sheet member is attached to outer portions of the juice collector tray 1, and overlies the otherwise open upper surface of that tray. Overlying portions of the platform 2 and cut fruit support surface 3 is a cam pedestal 4. Attached to and running along an edge of the cam pedestal 4 opposite the cut fruit support surface 3 is a knife edge 5. Also illustrated is a whole fruit feed chute 6.

As illustrated, the cut fruit support surface 3 is formed as a sheet of material, the end portions of which are hollow tubular sections 11, 12, through each of which a reinforcing rod 13, 14 is inserted. Portions of the hollow sections and reinforcing rods are forced under lugs 15, 16 to hold the cut fruit support surface 3 in place. Obviously, the cut fruit support surface 3 is so sized that stretching is required to place the portions 11, 13 and 12, 14 within the lugs 15, 16. This provides a flat, stretched portion 17 of the cut fruit support surface 3. Opposite parts of the flat portion 17 of the cut fruit support surface 3 rest on opposite upstanding walls 20, 21 of the juice collector tray 1. Within the juice collector tray 1 are one or more male press elements or cones 22. These interact with female press elements (not shown) to squeeze the halves of the cut citrus fruit when those halves are placed on the cut fruit support surface 3. The juice which is extracted from the cut fruit is collected in hollow 24 of the juice collector tray 1 and is continuously drawn off through appropriate means (not shown).

As illustrated, although partial openings of the cut fruit support surface 3 occur at junctures 25, 26 between the cut fruit support surface 3 and upstanding side walls 27, 28 of the juice collector tray 1, these openings at 25, 26 are remote from the platform 2 from which the cut fruit halves are moved onto the cut fruit support surface 3.

The cut fruit support surface 3 is, however, provided with a plurality of openings 30 which are formed in its portion 17 which is flat across the open upper part of the juice collector tray 1. Openings 30 are also formed in portions 31, 32 of the cut fruit support surface 3 which, in use, are perpendicular to the portion 17 and on which the hollow, tubular sections 11, 12 are formed. These openings 30 are provided both to allow juice to pass through the cut fruit support surface 3 and to aid in its stretching as it is being affixed to the juice collector tray 1.

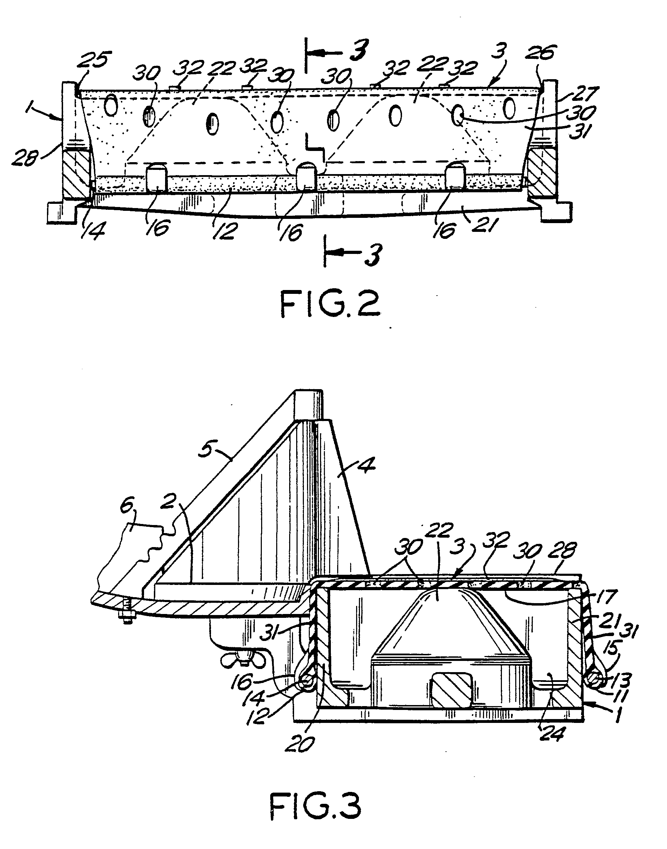

The portion 17 of the cut fruit support surface 3 is provided with both reinforcing ridges 32 (on its upper surface) and slits 33 (therethrough). As will be apparent, particularly from Figure 2, the ridges 32 essentially bracket the narrowest portion of each of the cones 22 and aid in reinforcing those portions of the fruit support surface 3 which experience the most wear during squeezing of the fruit, and in guiding the cut fruit halves over the cones 22 to be squeezed.

The slits 33 are formed between the outer pairs of the reinforcing ribs 32 and are thus centered over each of the cones 22. As illustrated, each of the slits 33 is not a simple line slit, but rather has a widened area 34 at each end, and a widened portion 35 in the centre. While a single widened portion 35 is shown at the centre of each of the slits, it will be appreciated that additional widened portions can be formed along the length of each of the slits. The widened areas 34 are formed at the ends of each slit to prevent unintentional extension of the slit and, thus, maintain the integrity of the slit length. The widened portions 35 are placed along the slits to aid in opening of the slits as the cut fruit support surface 3 is moved downwardly under the action of the female press elements.

The cut fruit support surface 3, as previously indicated, is formed of an elastic material. The elastic material which is employed can be rubber, or any of the synthetic elastic materials which will withstand the necessary repeated flexure, and which will be inert to the citrus fruit juices being squeezed from the cut fruit halves.

In operation, whole fruit falls, generally by gravity, down the chute 6 to rest against the knife edge 5. Means (not shown) force the whole fruit over the knife edge 5 where it is cut into two halves which are spread by the curved surfaces of the cam pedestal 4 so as to lie flat on the platform 2. Means (not shown) then force the cut fruit halves from the platform 2 onto the cut fruit support surface 3, the cut fruit halves being generally centered over the cones 22. The female press elements (not shown) then move downwardly to force the cut fruit halves against the cones 22 so as to express the juice from the fruit.

During the squeezing or expressing operation, the cut fruit support surface 3 moves downwardly against and along the cones 22. However, because of the slits 33, there is neither excessive stretching, nor undue wear, of the cut fruit support surface 3. As the cut fruit support surface 3 is forced downwardly, the slits 33 widen, relieving the stress on the surface 3 and, at the same time, allowing the cut fruit halves to come into more direct contact with the cones 22.

On completion of the squeezing operation, the female press elements are moved upwardly, away from the cut fruit support surface 3, allowing this surface to return to its original position (as shown). In moving to this original position, the slits 33 close and, as upward movement is continued, remove the spent rind or peel from the cones 22. When the cut fruit support surface 3 has fully returned to its original position, the spent rind or peel rests upon the cut fruit support surface 3 from where it may be removed and discarded by appropriate means (not shown).

**Claims**

1. A citrus fruit juice extracting machine comprising:
—means (6) for feeding whole citrus fruit against means (5) for cutting the fruit into halves, said cutting means being disposed in a vertical plane at right angles to and midway between a pair of means for expressing juice simultaneously from both cut fruit halves;
—means for feeding the cut fruit halves onto a support surface for supporting the cut fruit halves during expressing the juice from the cut fruit halves, said support surface being provided by an elastic sheet member (3) allowing passage therethrough of the juice expressed from the cut fruit halves and being supported by and held in place on the outer portions of upstanding opposite walls of a rectangular juice collector tray (1) positioned below and having a bottom; and
—means above and below the support surface for expressing the juice from the cut fruit halves, the means (22) below the support surface being provided within the juice collector tray (1);
characterised in that said elastic sheet member (3) is supported by and held in place on the opposite walls (20, 21) of the juice collector tray (1) which are perpendicular to said cutting means (5), no opening being left between said support surface and said juice collector tray (1) adjacent the location of feeding said cut fruit halves onto said support surface.

2. A citrus fruit juice extracting machine according to claim 1, characterised in that the elastic sheet member (3) is formed with a plurality of openings (30) to provide for passage of the juice expressed from the cut fruit.

3. A citrus fruit juice extracting machine according to either preceding claim, characterised in that the elastic sheet member (3) is formed with reinforcing ridges (32) extending in a direction parallel to the cutting means (5) and generally overlying the expressing means (22) provided within the juice collector tray (1).

4. A citrus fruit juice extracting machine according to any preceding claim, characterised in that the elastic sheet member (3) is formed with slits (33) extending in a direction parallel to the cutting means (5) and centrally overlying the expressing means (22) provided within the juice collector tray (1).

5. A citrus fruit juice extracting machine according to claim 4, characterised in that each of the slits (33) is formed with enlarged ends (34) to prevent lengthening of the slits (33).

6. A citrus fruit juice extracting machine according to any preceding claim, characterised in that each portion of the elastic sheet member (3) supported by and held in place on a respective outer portion of said opposite walls (20, 21) of the juice collector tray (1) is formed at its end with a hollow tubular section (11, 12) through which a reinforcing rod (13, 14) is inserted.

7. A citrus fruit juice extracting machine according to claim 6, characterised in that the reinforcing rods (13, 14) are held beneath lugs (15, 16) formed on the outer portions of said opposite walls (20, 21) of the juice collector tray (1).

8. A citrus fruit juice extracting machine according to any preceding claim, characterised in that the elastic sheet member (3) is not held in place on the other opposite walls (27, 28) of the juice collector tray (1).

9. A citrus fruit juice extracting machine according to any preceding claim, characterised in that the expressing means (22) provided within the juice collector tray (1) is in the form of a pair of conical male press elements.

**Patentansprüche**

1. Citrusfruchtsaftgewinnungsmaschine, die umfasst:
—Mittel (6) zum Zuführen ganzer Citrusfrüchte gegen Mittel (5), die die Frucht in Hälften schneidet, wobei dieses Schneidmittel in einer Vertikalebene unter rechten Winkeln zu und in der Mitte zwischen einem Paar von Mitteln angeordnet ist, welche Saft gleichzeitig von beiden geschnittenen Fruchthälften auspressen;
—Mittel zum Zuführen der geschnittenen Fruchthälften auf eine Stützfläche zum Lagern der geschnittenen Fruchthälften während des Auspressens des Saftes von den geschnittenen Fruchthälften, wobei die Stützfläche durch ein elastisches Bahnelement (3) gebildet wird, durch welches der von den geschnittenen Fruchthälften ausgepresste Saft treten kann und welches auf den äusseren Bereichen stehender sich gegenüberliegender Wandungen eines rechtwinkligen Saftsammlertrogs (1) abgestützt und am Ort gehalten wird, wobei der Trog darunter angeordnet ist und über einen Boden verfügt; und

—Mittel oberhalb und unterhalb der Stützfläche zum Auspressen des Saftes von den geschnittenen Fruchthälften, wobei die unerhalb der Stützfläche vorgesehenen Mittel (22) innerhalb des Saftsammlertrogs (1) vorgesehen sind;
dadurch gekennzeichnet, daß dieses elastische Bahnelement (3) abgestützt wird durch und am Ort gehalten wird auf den sich gegenüberstehenden Wandungen (20, 21) des Saftsammlertrogs (1), welche senkrecht zu diesen Schneidmitteln (5) angeordnet sind, wobei keine Öffnung zwischen dieser Stützfläche und diesem Saftsammlertrog (1) benachbart dem Ort der Zuführung dieser geschnittenen Fruchthälften auf diese Stützfläche belassen ist.

2. Citrusfruchtsaftgewinnungsmaschine nach Anspruch 1, dadurch gekennzeichnet, daß das elastische Bahnelement (3) mit einer Vielzahl von Öffnungen (30) ausgebildet ist, um für den Durchgang des von der geschnittenen Frucht ausgepressten Saftes zu sorgen.

3. Citrusfruchtsaftgewinnungsmaschine nach einem der vorhergehenden Ansprüche, dadurch gekennzeichnet, daß das elastische Bahnelement (3) mit Verstärkungsrippen (32) ausgebildet ist, die sich in einer Richtung parallel zu den Schneideinrichtungen (5) erstrecken und im allgemeinen die Auspreßmittel (22) überlagern, welche innerhalb des Saftsammlertrogs (1) vorgesehen sind.

4. Citrusfruchtsaftgewinnungsmaschine nach einem der vorhergehenden Ansprüche, dadurch gekennzeichnet, daß das elastische Bahnelement (3) mit Schlitzen (33) ausgebildet ist, welche in einer Richtung parallel zu den Schneideinrichtungen (5) sich erstrecken und mittig die Auspreßeinrichtungen (22) überlagern die innerhalb des Saftsammlertrogs (1) vorgesehen sind.

5. Citrusfruchtsaftgewinnungsmaschine nach Anspruch 4, dadurch gekennzeichnet, daß jeder der Schlitze (33) mit vergrösserten Enden (34) ausgebildet ist um eine Längung der Schlitze (33) zu verhindern.

6. Citrusfruchtgewinnungsmaschine nach einem der vorhergehenden Ansprüche, dadurch gekennzeichnet, daß jeder Teil des elastischen Bahnelements (3), der abgestützt ist durch und gehalten wird an seinem Ort auf einem jeweiligen äusseren Teil dieser sich gegenüberstehenden Wandungen (20, 21) des Saftsammlertrogs (1) an seinem Ende mit einem hohlen röhrenförmigen Abschnitt (11, 12) ausgebildet ist, durch welchen eine Verstärkungsstange (13, 14) eingeführt ist.

7. Citrusfruchtsaftgewinnungsmaschine nach Anspruch 6, dadurch gekennzeichnet, daß die Verstärkungsstäbe (13, 14) unterhalb Zapfen (15, 16) gehalten sind, die auf den äusseren Teilen dieser sich gegenüberliegenden Wandungen (20, 21) des Saftsammlertrogs (1) ausgebildet sind.

8. Citrusfruchtsaftgewinnungsmaschine nach einem der vorhergehenden Ansprüche, dadurch gekennzeichnet, daß das elastische Bahnelement (3) nicht an seinem Ort auf den anderen gegenüberliegenden Wandungen (27, 28) des Saftsammlertrogs (1) gehalten ist.

9. Citrusfruchtsaftgewinnungsmaschine nach einem der vorhergehenden Ansprüche, dadurch gekennzeichnet, daß das innerhalb des Saftsammlertrogs (1) vorgesehene Auspreßmittel (22) in Form eines Paares konischer vorstehender Preßelemente vorgesehen ist.

## Revendications

1. Dispositif d'extraction du jus des agrumes, comprenant:

—des moyens (6) pour amener des agrumes entiers contre un dispositif (5) permettant de couper les fruits en deux, ce dispositif de coupe étant disposé dans un plan vertical, à angle droit par rapport à deux dispositifs destinés à exprimer le jus simultanément des deux moitiés de fruit coupées, et à mi-distance entre ces deux dispositifs;

—des moyens pour amener les moitiés de fruit coupées sur une surface de support destinée à soutenir les moitiés de fruit coupées pendant que le jus est exprimé de ces dernières, ladite surface de support étant définie par une feuille élastique (3) qui peut être traversée par le jus exprimé des moitiés de fruit coupées et qui est supportée par et maintenue en place sur les parties extérieures de parois verticales opposées d'un bac collecteur de jus rectangulaire (1) placé au-dessous et présentant un fond; et

—des dispositifs placés au-dessus et au-dessous de la surface de support, pour exprimer le jus des moitiés de fruit coupées, une partie (22) de ces dispositifs située au-dessous de la surface de support, se trouvant à l'intérieur du bac collecteur de jus (1);

caractérisé en ce que ladite feuille élastique (3) est supportée par et maintenue en place sur les parois opposées (20, 21) du bac collecteur de jus (1), qui sont perpendiculaires audit dispositif de coupe (5), aucune ouverture ne subsistant entre ladite surface de support et ledit bac collecteur de jus (1) à proximité de l'emplacement où lesdites moitiés de fruit coupées passent pour parvenir sur ladite surface de support.

2. Dispositif d'extraction du jus des agrumes selon la revendication 1, caractérisé en ce que le feuille élastique (3) est percée d'une multitude d'orifices (30) qui permettent le passage du jus exprimé des fruits coupés.

3. Dispositif d'extraction du jus des agrumes selon l'une ou l'autre des revendications précédentes, caractérisé en ce que la feuille élastique (3) est pourvue de nervures de renforcement (32) qui s'étendent dans une direction parallèle au dispositif de coupe (5) et sont sensiblement superposées aux dispositifs (22) pour exprimer le jus, qui se trouvent à l'intérieur du bac collecteur de jus (1).

4. Dispositif d'extraction du jus des agrumes selon l'une quelconque des revendications précédentes, caractérisé en ce que la feuille élastique (3) est pourvue de fentes (33) qui s'étendent dans une direction parallèle au dispositif de coupe (5) et sont centralement superposées aux dispositifs (22) pour exprimer le jus, qui se trouvent à l'intérieur du bac collecteur de jus (1).

5. Dispositif d'extraction du jus des agrumes selon la revendication 4, caractérisé en ce que chacune des fentes (33) présente des extrémités élargies (34) interdisant un allongement des fentes (33).

6. Dispositif d'extraction du jus des agrumes selon l'une quelconque des revendications précédentes, caractérisé en ce que chaque portion de la feuille élastique (3), supportée par et maintenue en place sur une partie extérieure respective desdites parois opposées (20, 21) du bac collecteur de jus (1), comporte, à son extrémité, une section tubulaire creuse (11, 12) dans laquelle est insérée une tige de renforcement (13, 14).

7. Dispositif d'extraction du jus des agrumes selon la revendication 6, caractérisé en ce que les tiges de renforcements (13, 14) sont retenues au-dessous de pattes (15, 16) formées sur les parties extérieures desdites parois opposées (20, 21) du bac collecteur de jus (1).

8. Dispositif d'extraction du jus des agrumes selon l'une quelconque des revendications précédentes, caractérisé en ce que la feuille élastique (3) n'est pas maintenue en place sur les autres parois opposées (27, 28) du bac collecteur de jus (1).

9. Dispositif d'extraction du jus des agrumes selon l'une quelconque des revendications précédentes, caractérisé en ce que les dispositifs (22) pour exprimer le jus, qui se trouvent à l'intérieur dubac collecteur de jus (1), se présentent sous la forme d'une paire d'organes coniques de pressage mâles.

FIG.1

FIG.2

FIG.3